# EUROPÄISCHE PATENTANMELDUNG

(11) **EP 3 508 432 A1**
(43) Veröffentlichungstag der Anmeldung: **10.07.2019**
(21) Anmeldenummer: 19150566.8
(22) Anmeldetag: 07.01.2019
(51) Int. Cl.: B65B 31/02, B65B 9/04, G05D 16/20

(54) **VERPACKUNGSMASCHINE MIT DRUCKREGELVORRICHTUNG UND VERFAHREN**

(30) Priorität: 08.01.2018 DE 102018100224
(71) Anmelder: MULTIVAC Sepp Haggenmüller SE & Co. KG, 87787 Wolfertschwenden (DE)
(72) Erfinder: ENDERLE, Tobias, 87730 Bad Grönenbach (DE); HOLDERIED, Thomas, 87463 Dietmannsried (DE); KIRMSE, Herbert, 87787 Wolfertschwenden (DE); HONOLD, Daniel, 87616 Marktoberdorf (DE); RÄDLER, Michael, 87439 Kempten (DE); FELCH, Florian, 87471 Durach (DE); SCHRADE, Peter, 72574 Bad Urach (DE)
(74) Vertreter: Grünecker Patent- und Rechtsanwälte PartG mbB

(57) **Zusammenfassung**

Die Erfindung bezieht sich auf eine Verpackungsmaschine (1) mit einer Atmosphärenveränderungsstation (3), durch welche eine Atmosphäre innerhalb einer herzustellenden Verpackung (14, 14') durch Evakuieren und/oder Begasen veränderbar ist. Die Verpackungsmaschine (1) weist zum Verändern der Atmosphäre eine Druckregelvorrichtung (24) auf, die dazu konfiguriert ist, einen Evakuierungsdruck und/oder einen Begasungsdruck zu regeln. Die Erfindung zeichnet sich dadurch aus, dass die Druckregelvorrichtung (24) ein erstes vorzugsweise elektrisch ansteuerbares 2/2-Wegeventil (25a) und ein zweites vorzugsweise elektrisch ansteuerbares 2/2-Wegeventil (25b) aufweist, die dazu konfiguriert sind, den Evakuierungsdruck und/oder den Begasungsdruck durch Einstellung eines Volumenstroms zu beeinflussen, wobei das erste und das zweite 2/2-Wegeventil (25a, 25b) parallel zueinander geschaltet und unabhängig voneinander ansteuerbar sind.

Die Erfindung bezieht sich auch auf ein Verfahren zum Verändern einer Atmosphäre innerhalb einer Verpackung (14, 14') durch eine Verpackungsmaschine (1) mit einer Druckregelvorrichtung (24).Das Verfahren umfasst Erzeugen eines Volumenstroms zu der Verpackung (14, 14') hin oder von der Verpackung (14, 14') fort und Regeln des Volumenstroms durch die Druckregelvorrichtung (24). Das erfindungsgemäße Verfahren zeichnet sich dadurch aus, dass das Regeln des Volumenstroms ein individuelles Öffnen und/oder Schließen eines oder mehrerer von mindestens zwei parallel zueinander geschalteten 2/2-Wegeventilen (25a, 25b) umfasst.

## Beschreibung

Die Erfindung bezieht sich auf eine Verpackungsmaschine gemäß dem Oberbegriff des Anspruchs 1 sowie auf ein Verfahren gemäß dem Oberbegriff des Anspruchs 12.

Eine gattungsgemäße Verpackungsmaschine ist beispielsweise aus der EP 2 011 734 B1 bekannt. Durch solche Verpackungsmaschinen kann die Atmosphäre der zu erzeugenden Verpackungen gezielt verändert werden, beispielsweise um die Haltbarkeit oder das Erscheinungsbild der in der Verpackung aufgenommenen Produkte oder aber die Stabilität der Verpackung selbst zu erhöhen. Insbesondere kann innerhalb der Verpackung ein Vakuum erzeugt werden oder die Verpackung mit einem geeigneten Gas befüllt werden, das gegebenenfalls andere, möglicherweise in der Verpackung vorhandene Gase verdrängt. Beim Evakuieren und/oder Austauschen der in der Verpackung vorhandenen Gase gilt es, den Inhalt der Verpackung so weit als möglich zu schonen. Insbesondere muss sichergestellt werden, dass leichtere Bestandteile des Verpackungsinhalts, wie zum Beispiel Mehl oder andere Pulver oder aber Flüssigkeiten, nicht durch den Evakuierungs- und/oder Begasungsluftstrom aufgewirbelt werden. Gleichzeitig gilt es jedoch, die für den Gasaustausch oder das Evakuieren benötigte Zeit zu minimieren, um die Effizienz des Verpackungsprozesses zu steigern. In der EP 2 011 734 B1 wird zur Lösung dieses Konflikts ein Proportionalregler vorgeschlagen. Auch diese Lösung lässt jedoch noch weiteren Raum für Verbesserungen.

Demzufolge ist es eine Aufgabe der vorliegenden Erfindung, eine Verpackungsmaschine anzugeben, die durch konstruktiv möglichst einfache Maßnahmen hinsichtlich Effizienz und Schonung des Verpackungsinhalts verbessert ist.

Diese Aufgabe wird durch eine Verpackungsmaschine mit den Merkmalen des Anspruchs 1 gelöst. Die Aufgabe wird außerdem durch ein Verfahren mit den Merkmalen des Anspruchs 12 gelöst. Vorteilhafte Weiterbildungen sind in den jeweiligen abhängigen Ansprüchen angegeben.

Die Erfindung sieht eine Verpackungsmaschine mit einer Atmosphärenveränderungsstation vor, durch welche eine Atmosphäre innerhalb einer herzustellenden Verpackung durch Evakuieren und/oder Begasen veränderbar ist. Dabei weist die Verpackungsmaschine zum Verändern der Atmosphäre eine Druckregelvorrichtung auf, die dazu konfiguriert ist, einen Evakuierungsdruck und/oder einen Begasungsdruck zu regeln. Die Erfindung zeichnet sich dadurch aus, dass die Druckregelvorrichtung ein erstes vorzugsweise elektrisch ansteuerbares 2/2-Wegeventil und ein zweites vorzugsweise elektrisch ansteuerbares 2/2-Wegeventil aufweist, die dazu konfiguriert sind, den Evakuierungsdruck und/oder den Begasungsdruck durch Einstellung eines Volumenstroms zu beeinflussen, wobei das erste und das zweite 2/2-Wegeventil parallel zueinander geschaltet und individuell ansteuerbar sind.

Als Atmosphärenveränderungsstation im Sinne der Erfindung kann jegliche Arbeitsstation einer Verpackungsmaschine angesehen werden, welche die Atmosphäre bzw. den gasförmigen Inhalt der Verpackungen gezielt verändert. Insbesondere kann es sich dabei um einen Evakuierungs- oder Begasungsprozess handeln. Unter Begasen oder Begasung kann insbesondere ein Spülen mit einem Austauschgas, das Einströmen eines geeigneten Gases nach einer Evakuierung oder entsprechende Vorgänge mit einem Gasgemisch verstanden werden. Als Atmosphärenveränderung kann jedoch auch das einfache Evakuieren bzw. Vakuumieren der Verpackung angesehen werden. Im Folgenden werden die Begriffe "Evakuierungsdruck" und "Begasungsdruck" als der jeweils innerhalb der Verpackung vorherrschende oder zu erzeugende Druck verstanden. Als 2/2-Wegeventil kann gemäß dem allgemeinen Fachwissen ein Ventil gelten, dass zwei Anschlüsse und zwei Ventilstellungen aufweist. Insbesondere kann ein Ventil mit einem Ventileinlass und einem Ventilauslass gemeint sein, das in einer ersten Ventilstellung den Durchfluss zwischen Ventileinlass und Ventilauslass gestattet, und einen solchen Durchfluss in einer zweiten Ventilstellung blockiert. Als Ansteuerung des Ventils kann eine Veranlassung angesehen werden, die das Ventil von der ersten Ventilstellung in die zweite Ventilstellung umschaltet oder umgekehrt. Eine solche Veranlassung kann z. B. elektrisch oder pneumatisch erfolgen. Individuelles ansteuern der Ventile soll im Folgenden im Wesentlichen synonym zu einer unabhängig voneinander erfolgenden Ansteuerung der einzelnen Ventile verwendet werden.

Es ist vorstellbar, dass das zweite 2/2-Wegeventil eine größere maximale Durchflussquerschnittsfläche aufweist als das erste 2/2-Wegeventil. Ebenso ist jedoch auch denkbar, dass die maximale Durchflussquerschnittsfläche der beiden Ventile gleich ist. Eine Durchflussquerschnittsfläche kann als senkrecht zur Flussrichtung des jeweiligen Mediums verlaufende Fläche angesehen werden, die von dem Medium durchströmt wird. Eine unterschiedliche Größe kann den Vorteil aufweisen, dass eine größere Vielfalt an Gesamtdurchflussquerschnittsflächen realisiert werden kann. Als Gesamtdurchflussquerschnittsfläche kann eine Summe der Durchflussquerschnitssflächen der zu einem gegebenen Zeitpunkt geöffneten Ventile angesehen werden. Der Einsatz von 2/2-Wegeventilen mit gleichgroßen Durchflussquerschnittsflächen kann den Vorteil aufweisen, dass die Bauteilvielfalt reduziert werden kann.

Die Durchflussqueschnittsfläche kann eine intrinsische Eigenschaft der jeweiligen 2/2-Wegeventilee sein. In einer besonders vorteilhaften Variante können die Durchflussquerschnittsflächen der jeweiligen 2/2-Wegeventile jedoch auch durch eine oder mehrere Blenden realisiert sein. D. h. die parallel geschalteten 2/2-Wegeventile können sich lediglich durch die verwendete Blende, insbesondere durch die durch diese freigegebene Durchflussquerschnittsfläche, unterscheiden und ansonsten gleich sein. Die Blende/n kann/können jeweils in die 2/2-Wegeventile integriert oder extern angebracht sein. Es kann auch eine Blendenmaske vorgesehen sein, welche die unterschiedlichen Durchflussquerschnittsflächen mehrerer oder aller 2/2-Wegeventile realisiert. Die Blenden oder die Blendenmaske können stromabwärts oder stromaufwärts von einem Verschlusselement des 2/2-Wegeventils, beispielsweise eines Ventilschiebers, vorgesehen sein.

Es ist vorteilhaft, wenn die Druckregelvorrichtung einen Druckmessumformer aufweist, wobei die Druckregelvorrichtung dazu eingerichtet ist, durch den Druckmessumformer erzeugte Signale als Istwert zu berücksichtigen oder anhand dieser Signale einen Istwert zu ermitteln. Der Einsatz eines Druckmessumformers kann den Vorteil mit sich bringen, dass die Regelung sowie die Ansteuerung der Ventile elektrisch erfolgen können.

Es ist denkbar, dass der Druckmessumformer durch eine Druckmessleitung mit der Atmosphärenveränderungsstation verbunden ist, wobei die Druckmessleitung eine Länge aufweist, die kleiner als 1 m, vorzugsweise kleiner als 0,5 m, besonders bevorzugt kleiner als 25cm ist. Eine kurze Druckmessleitung kann zu genaueren Messergebnissen führen, da sie ein kleineres Volumen aufweist, wodurch der am Druckmessumformer anliegende Druck sich von dem in der Verpackung vorherrschenden Druck unterscheiden kann. Des Weiteren kann durch eine kürzere Druckmessleitung die Reaktionsschnelligkeit der Druckregelung erhöht werden, da Druckveränderungen in der Verpackung sich schneller auf den Druckmessumformer auswirken.

Analog ist es vorteilhaft, wenn eine Druckleitung zwischen den 2/2-Wegeventilen und der Atmosphärenänderungsstation eine Länge aufweist, die kleiner als 1 m, vorzugsweise kleiner als 0,5 m, besonders bevorzugt kleiner als 25cm ist. Bei einer Begasung mit unter Umständen teuren Austauschgasen ergibt sich der weitere Vorteil eines verringerten Verbrauchs des Austauschgases.

Besonders vorteilhaft ist es, wenn die Druckregelvorrichtung ein zusätzliches 2/2-Wegeventil, vorzugsweise zwei zusätzliche 2/2-Wegeventile, besonders bevorzugt drei zusätzliche 2/2-Wegeventile aufweist, das/die parallel zueinander und zu dem ersten und den zweiten 2/2-Wegeventil geschaltet und unabhängig voneinander ansteuerbar ist/sind. Durch die Erhöhung der Anzahl der Ventile kann zum Einen die Flexibilität der Einstellung des Volumenstroms erhöht werden. Zum Anderen kann ein größerer Bereich von Gesamtdurchflussquerschnittsflächen abgedeckt werden.

Besonders günstig ist es, wenn alle 2/2-Wegeventile unterschiedliche Durchflussquerschnittsflächen aufweisen. Wie bereits weiter oben mit Bezug auf 2 2/2-Wegeventile mit unterschiedlichen Durchflussquerschnittsflächen erwähnt, kann dadurch die Flexibilität erhöht werden.

Die Durchflussqueschnittsfläche kann auch hier eine intrinsische Eigenschaft der jeweiligen 2/2-Wegeventile sein. In einer besonders vorteilhaften Variante können die Durchflussquerschnittsflächen der jeweiligen 2/2-Wegeventile durch eine oder mehrere Blenden realisiert sein. D. h. die parallel geschalteten 2/2-Wegeventile können sich lediglich durch die verwendete Blende, insbesondere durch die durch diese freigegebene Durchflussquerschnittsfläche, unterscheiden und ansonsten gleich sein. Die Blende/n kann/können in die 2/2-Wegeventile integriert oder extern angebracht sein. Es kann auch eine Blendenmaske vorgesehen sein, welche die unterschiedlichen Durchflussquerschnittsflächen mehrerer oder aller 2/2-Wegeventile realisiert. Die Blenden oder die Blendenmaske können stromabwärts oder stromaufwärts von einem Verschlusselement des 2/2-Wegeventils, beispielsweise eines Ventilschiebers, vorgesehen sein.

In einer weiteren Variante kann eine Durchflussquerschnittsfläche eines der 2/2-Wegeventile doppelt so groß sein wie eine Durchflussquerschnittsfläche desjenigen der 2/2-Wegeventile mit der nächstkleineren Durchflussquerschnittsfläche. Auf diese Weise kann eine besonders effiziente Aufteilung des Spektrums an möglichen Gesamtdurchflussquerschnittsflächen gewährleistet werden.

Es ist denkbar, dass ein Volumenstromsollwert oder ein Volumenstromsollwertverlauf durch einen Bediener einstellbar ist. Die Stärke des Volumenstroms ist zum Beispiel eine entscheidende Größe für die beabsichtigte Schonung des Verpackungsinhalts. Ein zu starker Volumenstrom beim Evakuieren kann beispielsweise dazu führen, dass leichtere Partikel des Verpackungsinhalts, wie zum Beispiel Paniermehl oder Puderzucker, aus der Verpackung abgesaugt werden. Beim Begasen mit einem zu hohen Volumenstrom können solche Artikel aufgewirbelt werden und das Erscheinungsbild der verpackten Ware und/oder die Qualität der Siegelnaht negativ beeinflussen, z. B indem Partikel zwischen zwei Folien die Adhäsion oder das Verschmelzen behindern. Durch einen einstellbaren Volumenstromsollwert oder Volumenstromsollwertverlauf können solche Vorgänge durch gezieltes Anpassen an die verpackten Produkte vermieden werden. Auch die Prozessgeschwindigkeit und die Genauigkeit der Einhaltung des gewünschten Drucks im Inneren der Verpackung kann durch geeignete Auswahl beeinflusst werden. Zum Beispiel kann ein niedriger Volumenstromsollwert zu Beginn des jeweiligen Vorgangs vermeiden, dass leichte Partikel aufgewirbelt oder abgesagt werden. Ein darauf folgend höher gewählter Volumenstromsollwert kann das zügige Erreichen des gewünschten Drucks gewährleisten. Ein darauf folgendes Verlangsamen des Volumenstroms kann vermeiden, dass der Druck innerhalb der Verpackung über bzw. unter den gewünschten Wert hinaus erhöht bzw. verringert wird (Überschwingen) und der gewünschte Druck so genau wie möglich eingehalten wird.

Besonders vorteilhaft ist es, wenn die Druckregelvorrichtung dazu konfiguriert ist, einen Volumenstromsollwertverlauf basierend auf Benutzereingaben zu bestimmen. Dies kann den Vorteil aufweisen, dass auch weniger qualifizierte Bediener die erfindungsgemäße Verpackungsmaschine bedienen können. Als Benutzereingaben können beispielsweise eine gewünschte Prozessgeschwindigkeit und/oder eine gewünschte Fehlertoleranz und/oder eine Gewichtung zwischen Prozessgeschwindigkeit und Fehlertoleranz angesehen werden. Auf diese Weise kann der Bediener bei Verpackungsinhalten ohne leichte Bestandteile eine hohe Prozessgeschwindigkeit wählen und bei Verpackungsinhalten, die solche Bestandteile aufweisen, eine geringere Prozessgeschwindigkeit. Bei Verpackungen, die empfindlich auf einen zu hohen Innendruck reagieren, beispielsweise durch Platzen, kann eine niedrige gewünschte Fehlertoleranz gewählt werden. Eine Gewichtung der jeweiligen Parameter gegeneinander kann unter Berücksichtigung der genannten und weiterer Faktoren erfolgen. Die Bestimmungen des Volumenstromsollwertverlaufs kann beispielsweise durch eine Auswahl von einer aus mehreren voreingestellten Kennlinien erfolgen, die den jeweiligen erfassten Benutzereingaben zugeordnet werden können. Alternativ ist es denkbar, dass geeignete Berechnungsverfahren in der Druckregelvorrichtung hinterlegt sind, die die vom Bediener getätigten Eingaben als Eingangsgrößen berücksichtigen und einen geeigneten Volumenstromsollwertverlauf ausgeben.

Die Erfindung bezieht sich auch auf ein Verfahren zum Verändern einer Atmosphäre innerhalb einer Verpackung durch eine Verpackungsmaschine mit einer Druckregelvorrichtung. Dieses Verfahren umfasst ein Erzeugen eines Volumenstroms zu der Verpackung hin oder von der Verpackung fort sowie ein Regeln des Volumenstroms durch die Druckregelvorrichtung. Das erfindungsgemäße Verfahren zeichnet sich dadurch aus, dass das Regeln des Volumenstroms ein individuelles Öffnen und/oder Schließen eines oder mehrerer von mindestens zwei parallel zueinander geschalteten 2/2-Wegeventilen umfasst. Aus diesem Verfahren ergeben sich Vorteile, die den oben mit Bezug auf die erfindungsgemäße Verpackungsmaschine erläuterten ähneln.

Es ist denkbar, dass das Verfahren des Weiteren ein Ermitteln des innerhalb der Verpackung herrschenden Evakuierungs- und/oder Begasungsdrucks basierend auf durch einen Druckmessumformer erzeugten Signalen umfasst. Da, wie bereits weiter oben erläutert, verschiedene Umstände, wie zum Beispiel die Länge einer Druckmessleitung von der Atmosphärenveränderungsstation zu dem Druckmessumformer, dazu führen können, dass der durch den Druckmessumformer erfasste Druck nicht zu jedem Zeitpunkt dem in der Verpackung vorherrschenden Druck entspricht, kann das Ermitteln basierend auf durch den Druckmessumformer erzeugten Signalen zum Beispiel das Einfügen von Korrekturfaktoren beinhalten.

In einer weiteren vorteilhaften Variante kann das Verfahren ein Bestimmen eines Volumenstromsollwertverlaufs basierend auf durch einen Bediener eingegebenen Benutzereingaben umfassen. Auch hier wird im Sinne der Knappheit auf die bereits mit Bezug auf die erfindungsgemäße Verpackungsmaschine erläuterten Vorteile verwiesen. Besonders günstig ist es auch hier, wenn die Benutzereingaben eine gewünschte Prozessgeschwindigkeit und/oder eine gewünschte Fehlertoleranz und/oder eine Gewichtung zwischen Prozessgeschwindigkeit und Fehlertoleranz umfassen.

Sowohl bei dem erfindungsgemäßen Verfahren als auch bei der erfindungsgemäßen Verpackungsmaschine können als Durchflussquerschnittsflächen zum Beispiel beliebige Kombinationen von beliebigen Werten in einem Bereich zwischen 0,1 mm und 10 mm² vorgesehen sein. Als Durchmesser der Durchflussquerschnittsflächen können beispielsweise beliebige Kombinationen von beliebigen Werten in einem Bereich zwischen 0,5 mm und 5 mm.

Die Erfindung bezieht sich auf eine Verpackungsmaschine sowie auf ein Verfahren der vorstehend beschriebenen Art. Im Folgenden wird ein vorteilhaftes Ausführungsbeispiel anhand von Figuren näher erläutert.
- Fig. 1: zeigt eine schematische Seitenansicht einer erfindungsgemäßen Verpackungsmaschine in einer Ausführungsform als Tiefziehverpackungsmaschine;
- Fig. 2: zeigt eine schematische Darstellung von Komponenten der Druckregelvorrichtung sowie von weiteren mit diesen zusammenwirkenden Komponenten der Verpackungsmaschine.

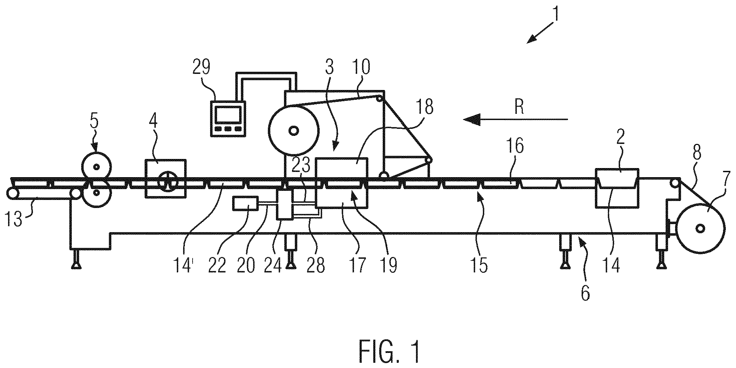

Fig. 1 zeigt in schematischer Ansicht eine erfindungsgemäße Verpackungsmaschine 1, beispielhaft als Tiefziehverpackungsmaschine ausgeführt. Diese Verpackungsmaschine 1 kann eine Formstation 2, eine Atmosphärenveränderungsstation 3, wie z. B. eine Siegelstation, eine Querschneideeinrichtung 4 und eine Längsschneideeinrichtung 5 aufweisen. Diese können in dieser Reihenfolge in einer Arbeitsrichtung R an einem Maschinengestell 6 angeordnet sein. Eingangsseitig kann sich an dem Maschinengestell 6 eine Zufuhrrolle 7 befinden, von der eine Unterfolie 8 abgezogen werden kann. Die Unterfolie 8 kann durch eine nicht gezeigte Vorschubeinrichtung in die Formstation 2 transportiert werden. Dort können durch Tiefziehen offene Verpackungen 14 als Mulden in die Unterfolie 8 geformt werden. Es können dabei mehrere nebeneinander liegende Verpackungen 14 gebildet werden. Die offenen Verpackungen 14 können zusammen mit dem umgebenden Bereich der Unterfolie 8 zu einer Einlegestrecke 15 weitertransportiert werden, wo sie mit Produkt 16 befüllt werden können. Anschließend kann ein Transport der befüllten Verpackungen 14 zusammen mit dem sie umgebenden Bereich der Unterfolie 8 zu der Atmosphärenveränderungsstation 3 erfolgen. Da es sich dabei im vorliegenden Ausführungsbeispiel um eine Siegelstation handelt, können sie dort mit einer Oberfolie 10 versiegelt werden. Durch das Ansiegeln der Oberfolie 10 auf die offenen Verpackungen 14 entstehen verschlossene Verpackungen 14', die mit der Querschneideeinrichtung 4 und der Längsschneideeinrichtung 5 vereinzelt und mittels einer Abführeinrichtung 13 abtransportiert werden können.

Die gezeigte Siegelstation 3 kann ein ein Siegelwerkzeugunterteil 17 und ein Siegelwerkzeugoberteil 18 umfassen, die zum Verschließen der Verpackungen 14 zusammenwirken können. Das Siegelwerkzeugunterteil 17 und/oder das Siegelwerkzeugoberteil 18 kann dazu beheizt werden. Nachdem die zu verschließende Verpackung 14 in eine geeignete Position verbracht wurde, können das Siegelwerkzeugunterteil 17 und das Siegelwerkzeugoberteil 18 in eine Siegelposition gebracht werden, in der sie eine die Verpackung 14 umfassende Kammer 19 bilden. Hierzu kann beispielsweise das Siegelwerkzeugunterteil 17 anhebbar sein. Alternativ oder zusätzlich könnte auch das Siegelwerkzeugoberteil 18 absenkbar sein.

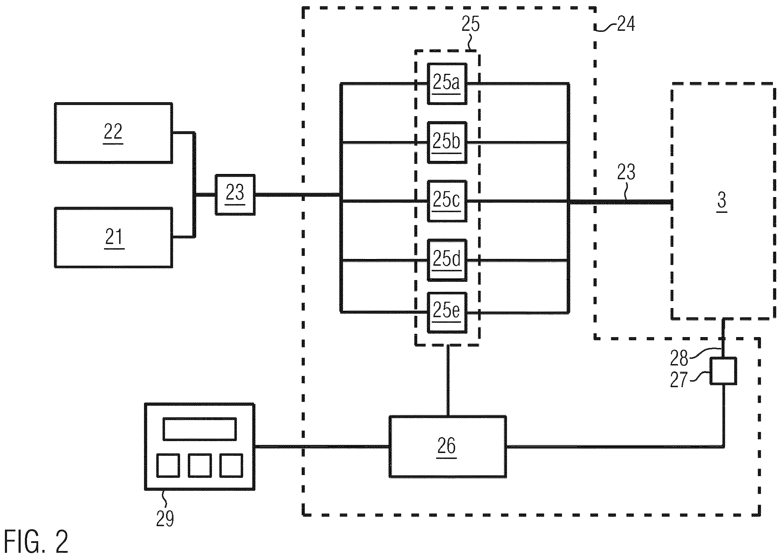

Die Siegelvorrichtung 3 kann einen Kanal 20 umfassen, durch den eine zu verschließende Verpackung 14 vor dem Siegeln evakuiert und/oder begast werden kann. Dies kann insbesondere bei der Verpackung von Lebensmittelprodukten vorteilhaft sein, da deren Haltbarkeit beim Verpacken unter Vakuum oder durch Schutzgase erhöht werden kann. Es ist insbesondere denkbar, dass die Verpackung 14 nach dem Evakuieren mit einem Schutzgas befüllt wird, welches je nach zu verpackendem Produkt 16 gewählt werden kann. Zum Erzeugen eines Unterdrucks in dem Kanal 20 kann an diesen Kanal 20 eine Vakuumquelle, im vorliegenden Ausführungsbeispiel eine Vakuumpumpe 22, angeschlossen sein. Zum Begasen kann eine Gasquelle 21 (s. Fig. 2), z. B. ein mit dem gewünschten Gas befüllter Druckbehälter, vorgesehen sein. Im vorliegenden Ausführungsbeispiel sind beide Komponenten vorhanden, wobei die Gasquelle 21 nur in Fig. 2 sichtbar ist. Zwischen ihnen kann durch eine Umschaltvorrichtung 23, z.B. ein 3/2-Wegeventil, umgeschaltet werden, beispielsweise um eine Verpackung zunächst zu evakuieren und anschließend mit einem durch die Gasquelle 21 zugeführten Gas zu befüllen.

In Figur 2 sind die Vakuumpumpe 22, die Gasquelle 21, die Umschaltvorrichtung 23 sowie die Atmosphärenveränderungsstation 3 dargestellt. Figur 2 zeigt außerdem, ebenfalls schematisch, eine Druckregelvorrichtung 24. Auch deren Verbindungen zu den weiteren dargestellten Komponenten der Verpackungsmaschine 1 sind schematisch angedeutet. Die Druckregelvorrichtung 24 umfasst eine Vielzahl von 2/2-Wegeventilen 25. Diese enthält ein erstes 2/2-Wegeventil 25a, ein zweites 2/2-Wegeventil 25b sowie drei zusätzliche 2/2-Wegeventile 25c, 25d, 25e. Die Druckregelvorrichtung 24 kann, wie im gezeigten Ausführungsbeispiel, außerdem eine Regeleinheit 26 umfassen. Diese kann dazu eingerichtet sein, die Vielzahl von 2/2-Wegeventilen 25 anzusteuern. Aus Gründen der Übersichtlichkeit ist nur eine Verbindung der Regeleinheit 26 mit der Vielzahl von 2/2-Wegeventilen 25 dargestellt. Es kann jedoch auch vorgesehen sein, dass die einzelnen 2/2-Wegeventile 25a, 25b, 25c, 25d, 25e jeweils individuell mit der Regeleinheit 26 verbunden sind. Alternativ oder zusätzlich können die einzelnen 2/2-Wegeventile 25a bis e unabhängig voneinander durch die Regeleinheit 26 ansteuerbar sein. Die Vielzahl von 2/2-Wegeventilen kann durch eine Druckleitung 23 mit der Atmosphärenveränderungsstation 3 verbunden sein.

Die Druckregelvorrichtung 24 kann außerdem, wie im Ausführungsbeispiel gezeigt, einen Druckmessumformer 27 umfassen. Dieser kann über eine Druckmessleitung 28 mit der Atmosphärenveränderungsstation 3 verbunden sein, um den dort und/oder in der Verpackung 14, 14' herrschenden Druck zu ermitteln. Ein an dem Druckmessumformer 27 anliegender Druck kann durch diesen in ein elektrisches Signal umgewandelt werden. Basierend auf diesem Signal kann die Regeleinheit 26 einen Druckistwert ermitteln.

Die Regeleinheit kann außerdem mit einer Bedieneinheit 29 der Verpackungsmaschine in Verbindung stehen. Von dieser kann sie durch einen Bediener eingegebene Benutzereingaben empfangen. Die Benutzereingaben können bereits einen Volumenstromsollwert oder einen Volumenstromsollwertverlauf umfassen. Alternativ kann die Regeleinheit 26 dazu konfiguriert sein, aus den empfangenen Benutzereingaben einen Volumenstromsollwert oder einen Volumenstromsollwertverlauf zu ermitteln.

Aus dem Volumenstromsollwert oder dem Volumenstromsollwertverlauf kann durch ein geeignetes Übersetzungsverfahren ermittelt werden, wie groß die Gesamtdurchflussquerschnittsfläche zu verschiedenen Zeitpunkten des Evakuierungs-und/oder Begasungsprozesses sein soll. Anschließend können zu den jeweiligen Gesamtdurchflussquerschnittsflächen geeignete Ventilkombinationen ermittelt werden, welche bei ihrer Öffnung diese Gesamtdurchflussquerschnittsflächen gewährleisten. Die Regeleinheit 26 kann dann zum jeweiligen Zeitpunkt die ermittelte Ventilkombination öffnen, beispielsweise das erste Ventil 25a zu Beginn des Prozesses, danach das erste und das zweite Ventil 25a, 25b sowie eines der zusätzlichen Ventile, zum Beispiel 25d, und gegen Ende des Prozesses wiederum nur das erste Ventil 25a. Bei der Übersetzung des kontinuierlichen Volumenstromsollwertverlaufs in die diskreten Ventilöffnungszeiten kann eine Hysterese zum Einsatz kommen, um unnötige Schaltzyklen der Ventile zu vermeiden.

## Patentansprüche

1. Verpackungsmaschine (1) mit einer Atmosphärenveränderungsstation (3), durch welche eine Atmosphäre innerhalb einer herzustellenden Verpackung (14, 14') durch Evakuieren und/oder Begasen veränderbar ist, wobei die Verpackungsmaschine (1) zum Verändern der Atmosphäre eine Druckregelvorrichtung (24) aufweist, die dazu konfiguriert ist, einen Evakuierungsdruck und/oder einen Begasungsdruck zu regeln, **dadurch gekennzeichnet, dass** die Druckregelvorrichtung (24) ein erstes vorzugsweise elektrisch ansteuerbares 2/2-Wegeventil (25a) und ein zweites vorzugsweise elektrisch ansteuerbares 2/2-Wegeventil (25b) aufweist, die dazu konfiguriert sind, den Evakuierungsdruck und/oder den Begasungsdruck durch Einstellung eines Volumenstroms zu beeinflussen, wobei das erste und das zweite 2/2-Wegeventil (25a, 25b) parallel zueinander geschaltet und unabhängig voneinander ansteuerbar sind.

2. Verpackungsmaschine nach Anspruch 1, **dadurch gekennzeichnet, dass** das zweite 2/2-Wegeventil (25b) eine größere maximale Durchflussquerschnittsfläche aufweist als das erste 2/2-Wegeventil (25a).

3. Verpackungsmaschine nach Anspruch 1 oder 2, **dadurch gekennzeichnet, dass** die Druckregelvorrichtung (24) einen Druckmessumformer (27) aufweist, wobei die Druckregelvorrichtung (24) dazu eingerichtet ist, durch den Druckmessumformer (27) erzeugte Signale als Istwert zu berücksichtigen.

4. Verpackungsmaschine nach Anspruch 3, **dadurch gekennzeichnet, dass** der Druckmessumformer (27) durch eine Druckmessleitung (28) mit der Atmosphärenveränderungsstation (3) verbunden ist, wobei die Druckmessleitung (28) eine Länge aufweist, die kleiner als 1 m, vorzugsweise kleiner als 0,5 m, besonders bevorzugt kleiner als 25cm ist.

5. Verpackungsmaschine nach einem der vorangehenden Ansprüche, **dadurch gekennzeichnet, dass** die Druckregelvorrichtung (24) ein zusätzliches 2/2-Wegeventil (25c), vorzugsweise zwei zusätzliche 2/2-Wegeventile (25c, 25d), besonders bevorzugt drei zusätzliche 2/2-Wegeventile (25c, 25d, 25e) aufweist, das/die parallel zueinander und zu dem ersten und dem zweiten 2/2-Wegeventil (25a, 25b) geschaltet und sämtliche 2/2-Wegeventile (25a, 25b, 25c, 25d, 25e) unabhängig voneinander ansteuerbar ist/sind.

6. Verpackungsmaschine nach einem der vorangehenden Ansprüche, **dadurch gekennzeichnet, dass** alle 2/2-Wegeventile (25a, 25b, 25c, 25d, 25e) unterschiedliche Durchflussquerschnittsflächen aufweisen.

7. Verpackungsmaschine nach Anspruch 2 oder 5, **dadurch gekennzeichnet, dass** eine Durchflussquerschnittsfläche eines der 2/2-Wegeventile (25a, 25b, 25c, 25d, 25e) doppelt so groß ist wie eine Durchflussquerschnittsfläche desjenigen der 2/2-Wegeventile mit der nächstkleineren Durchflussquerschnittsfläche.

8. Verpackungsmaschine nach einem der vorangehenden Ansprüche, **dadurch gekennzeichnet, dass** eine Druckleitung (23) als Verbindung zwischen den 2/2-Wegeventilen (25a, 25b, 25c, 25d, 25e) und der Atmosphärenänderungsstation (3) vorgesehen ist, die eine Länge aufweist, die kleiner als 1 m, vorzugsweise kleiner als 0,5 m, besonders bevorzugt kleiner als 25cm ist.

9. Verpackungsmaschine nach einem der vorangehenden Ansprüche, **dadurch gekennzeichnet, dass** ein Volumenstromsollwert oder ein Volumenstromsollwertverlauf durch einen Bediener einstellbar ist.

10. Verpackungsmaschine nach einem der vorangehenden Ansprüche, **dadurch gekennzeichnet, dass** die Druckregelvorrichtung (24) dazu konfiguriert ist, einen Volumenstromsollwertverlauf basierend auf Benutzereingaben zu bestimmen.

11. Verpackungsmaschine nach Anspruch 10, **dadurch gekennzeichnet, dass** die Benutzereingaben eine gewünschte Prozessgeschwindigkeit und/oder eine gewünschte Fehlertoleranz und/oder eine Gewichtung zwischen Prozessgeschwindigkeit und Fehlertoleranz umfassen.

12. Verfahren zum Verändern einer Atmosphäre innerhalb einer Verpackung (14, 14') durch eine Verpackungsmaschine (1) mit einer Druckregelvorrichtung (24), umfassend:
Erzeugen eines Volumenstroms zu der Verpackung (14, 14') hin oder von der Verpackung (14, 14') fort,
Regeln des Volumenstroms durch die Druckregelvorrichtung (24),
**dadurch gekennzeichnet, dass** das Regeln des Volumenstroms ein individuelles Öffnen und/oder Schließen eines oder mehrerer von mindestens zwei parallel zueinander geschalteten 2/2-Wegeventilen (25a, 25b) umfasst, wobei die 2/2-Wegeventile (25a, 25b) unabhängig voneinander angesteuert werden.

13. Verfahren nach Anspruch 12, **gekennzeichnet durch** Ermitteln des innerhalb der Verpackung (14, 14') herrschenden Evakuierungs- und/oder Begasungsdrucks basierend auf durch einen Druckmessumformer (27) erzeugten Signalen.

14. Verfahren nach Anspruch 12 oder 13, **gekennzeichnet durch** Bestimmen eines Volumenstromsollwertverlaufs basierend auf durch einen Bediener eingegebenen Benutzereingaben, wobei vorzugsweise die Benutzereingaben eine gewünschte Prozessgeschwindigkeit und/oder eine gewünschte Fehlertoleranz und/oder eine Gewichtung zwischen Prozessgeschwindigkeit und Fehlertoleranz umfassen.

15. Verfahren nach einem der Ansprüche 12 bis 14, **dadurch gekennzeichnet, dass** die Druckregelvorrichtung (24) ein zusätzliches 2/2-Wegeventil (25c), vorzugsweise zwei zusätzliche 2/2-Wegeventile (25c, 25d), besonders bevorzugt drei zusätzliche 2/2-Wegeventile (25c, 25d, 25e) aufweist, das/die parallel zueinander und zu dem ersten und dem zweiten 2/2-Wegeventil (25a, 25b) geschaltet und sämtliche 2/2-Wegeventile (25a, 25b, 25c, 25d, 25e) unabhängig voneinander ansteuerbar ist/sind.
